# EUROPEAN PATENT SPECIFICATION

(11) **EP 1 074 442 B1**
(45) Date of publication and mention of the grant of the patent: **15.03.2006**
(21) Application number: 00306626.3
(22) Date of filing: 03.08.2000
(51) Int. Cl.: B60S 1/34

(54) **Wiper apparatus for motor vehicles**
Wischanlage für Kraftfahrzeuge
Dispositif d'essuyage pour véhicules

(30) Priority: 05.08.1999 JP 22267299
(43) Date of publication of application: 07.02.2001
(73) Proprietor: Mitsuba Corporation, Kiryu-shi, Gunma-ken (JP)
(72) Inventor: Igarashi, Yuji, Ohta-shi, Gunma-ken (JP)
(74) Representative: Smith, Norman Ian

(56) References cited:
- EP-A- 0 806 329
- EP-A- 0 916 559
- EP-A- 0 958 976
- DE-A- 19 546 906
- DE-A- 19 903 140
- FR-A- 2 763 296
- PATENT ABSTRACTS OF JAPAN vol. 2000, no. 05, 14 September 2000 (2000-09-14) -& JP 2000 062575 A (ASMO CO LTD;HONDA MOTOR CO LTD), 29 February 2000 (2000-02-29)
- PATENT ABSTRACTS OF JAPAN vol. 1999, no. 10, 31 August 1999 (1999-08-31) -& JP 11 139256 A (JIDOSHA DENKI KOGYO CO LTD;NISSAN MOTOR CO LTD), 25 May 1999 (1999-05-25)

## Description

### BACKGROUND OF THE INVENTION

### 1. Field of the Invention

The present invention relates to the technical field of wiper apparatus for motor vehicles. Such wiper apparatus can be mounted on motor vehicles, such as passenger cars, buses and trucks.

### 2. Description of the Related Art

In general, a wiper apparatus is provided in a motor vehicle to wipe a window surface such as a windshield, and in this wiper apparatus, a pivot shaft is fitted to a sleeve and mounted on a vehicle body side so as to be rotatable around its axis. The proximal end portion of the pivot shaft is coupled to a link mechanism of a wiper motor which serves as a drive source while a wiper arm is fixedly secured to the tip portion thereof so that it swings back and forth when the wiper is energised in order to wipe the window surface. In one type of wiper apparatus, the wiper arm and the tip portion of the pivot shaft are designed to protrude outwardly from the vehicle body. On impact from outside the body, this type directly receives the impact load which can cause it to break or to deform, or to suffer serious damage.

Accordingly, as disclosed in JP-A-11-124013, there has been proposed a construction in which a brittle or frangible portion is made in a depression preventing member such as a washer, for preventing the pivot shaft from being depressed or pressed in toward the interior of the motor vehicle with respect to the sleeve. On impact the brittle portion is ruptured or sheared (as shown in Figs. 8 and 9 of the aforesaid publication) or the depression preventing member is deformed to cause the pivot shaft to be depressed so that it moves toward the interior side of the vehicle (shown in Fig. 6 of the aforesaid publication) when a load exceeding a predetermined value is applied to the tip portion of the pivot shaft from the outside of the motor vehicle toward the vehicle interior (in its axial and inward direction), thereby reducing the impact load.

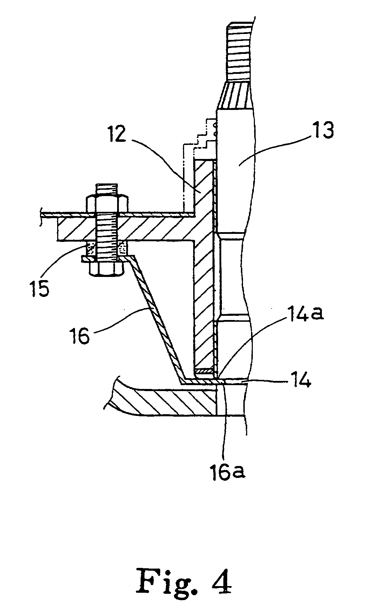

However, in JP-A-11-124013, in the case of the breakdown of the brittle portion of the depression preventing member, naturally a large stress (shearing force) operates at the moment of the breakdown, which decreases the effect of reducing damage such as breakdown. In the case of a construction which makes use of the deformation of the depression preventing member, a large stress does not operate instantaneously unlike the case of the breakdown. This type of arrangement as shown in Fig. 4, includes a stopping groove 14 which is formed in a pivot shaft 13 supported rotatably by a sleeve 12, and a tip portion 16a of a slip-out preventing member (bracket piece) 16 which is fixed by a bolt through a rubber vibration insulator 15 to the body side is inserted into the stopping groove 14. Thus, when a load acts on the pivot shaft 13 from the outside in an axial direction, the direction of the load is in the axial direction of the pivot shaft 13, but is not in a radial direction thereof in which the depression preventing member tip portion 16a can move out of the stopping groove 14. Accordingly, the depression preventing member tip portion 16a is bent locally by an edge portion 14a of the stopping groove 14 with the stopping groove edge portion 14a biting into the tip portion 16a. Then the depression preventing member tip portion 16a is drawn over the stopping groove edge portion 14a and disengages from the stopping groove 14. Thus not only does a corresponding load result, but also difficulty is experienced in controlling this load constantly so that differences among products occur, thereby decreasing the effectiveness of reducing damage such as breakdown. This invention aims to solve these problems.

EP-A-080639 describes a wiper apparatus having a sleeve secured to a vehicle body, a pivot shaft which extends through the sleeve and which can drive a wiper arm and a depression preventing member for resisting pression of the pivot shaft, the depression preventing member being a spring ring with a tapered inner surface.

### SUMMARY OF THE INVENTION

According to the present invention there is provided a wiper apparatus for a motor vehicle, comprising: a sleeve securable to a vehicle body; and
a pivot shaft which extends through and is supported rotatably in said sleeve, one end portion of the shaft on the interior side of the vehicle being connected to a drive source and its other end portion on the exterior side of the vehicle being coupled to a wiper arm, wherein said pivot shaft is designed to be depressed toward said interior side of the vehicle with respect to said sleeve when a load exceeding a predetermined value is applied axially on said pivot shaft from said exterior side of the vehicle, a depression preventing or resisting member being interposed between said pivot shaft and said sleeve and being deformable when receiving said load, characterised in that said depression preventing or resisting member comprises a washer with a part ring-like configuration which is supported in a two-point supporting arrangement such that its inner circumferential section engages in a stopping groove formed in the pivot shaft and can contact the end of the exterior side of the stopping groove from the vehicle exterior side while the outer circumferential section can contact the tip portion of the sleeve from the interior side of the vehicle, whereby when said load is applied on the pivot shaft in the axial and vehicle interior direction the contacting portion with the stopping groove is urged towards the interior side of the vehicle to allow the depression preventing member to deform into a conical-washer shape in the interior direction of the vehicle within a deformation space S provided between said pivot shaft and said sleeve by using said contacting portion of the tip portion of the sleeve as a fulcrum.

With this construction, the depression of the pivot shaft is achieved by the deformation of the depression preventing member, while the deformation of the depression preventing member occurs smoothly, thus relieving damage such as breakdown.

In this case, the deformation space can be made to be part of a space for accommodating a bearing bush located between the pivot shaft and the sleeve; whereupon, for providing the deformation space, it is possible to provide it using the bush accommodating space directly so that an increase in size is avoidable.

In addition, an inner circumferential portion of the depression preventing member locates in a stopping groove made in the pivot shaft, while an outer circumferential portion thereof is brought into contact with a tip portion of the sleeve, with the stopping groove having an extent in an axial direction so as to constitute a portion of the deformation space. In consequence, the deformation of the depression preventing member is made in a condition where the depression preventing member is brought into contact with two inner and outer points: the tip portion of the sleeve and the vehicle exterior side end portion of the stopping groove, so the deformation of the depression preventing member is achievable smoothly while a local bending is avoidable.

### BRIEF DESCRIPTION OF THE DRAWINGS

The object and features of the present invention will become more readily apparent from the following detailed description of the preferred embodiment taken in conjunction with the accompanying drawings in which:

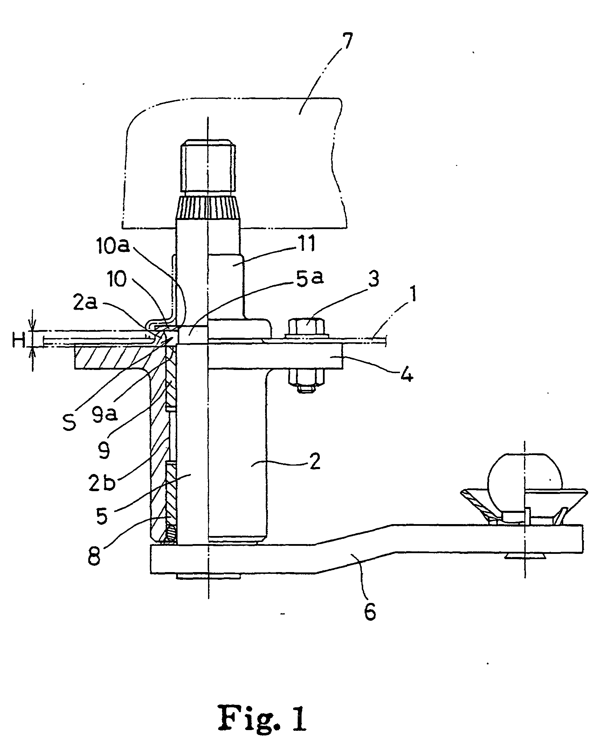

Fig. 1 is a front elevational view partly in section showing a pivot shaft section of a wiper apparatus in accordance with this invention in its normal use condition;
Fig. 2 is a front elevational view partly in section showing a pivot shaft section of a wiper apparatus in accordance with this invention, which is in a depressed condition;
Fig. 3 is a front elevational view showing a washer used in the apparatus of Figure 1; and
Fig. 4 is a front elevational view, partly in section showing a conventional example.

### DESCRIPTION OF THE PREFERRED EMBODIMENTS

An embodiment of the present invention will be described hereinbelow with reference to the drawings.

In the illustrations, reference numeral 1 designates a vehicle body panel of a motor vehicle. A sleeve or pivot holder 2 of a wiper apparatus according to an embodiment of this invention is mounted on this vehicle body panel 1. It should be noted the mounting location of the sleeve 2 is not limited to the vehicle body panel 1, and it is also possible that the sleeve 2 is mounted on for example a rear windshield. The sleeve 2 has a cylindrical configuration and has a flange section 4 formed at one axial end. This flange section 4 is for fixedly attaching the sleeve 2 by means of bolts 3 to the vehicle body panel 1. The sleeve 2 has a protruding cylinder section 2a which is formed to penetrate through the vehicle body panel 1 and protrude toward the exterior side of the vehicle when the sleeve 2 is fixedly attached to the vehicle body panel 1.

Reference numeral 5 represents a pivot shaft which extends axially through the sleeve 2. As is conventional in this art, a link arm 6 is fixedly secured to the proximal portion of the pivot shaft positioned on the interior side of the vehicle while a wiper motor, not shown, is coupled to this link arm 6. Furthermore, a proximal portion of the wiper arm 7 is secured to the tip portion of the pivot shaft 5 which protrudes from the exterior side of the vehicle. When the wiper motor is energised, the wiper arm 7 reciprocates to wipe a window surface.

Reference numerals 8 and 9 denote bushes or bearings formed from resin which are located in an annular space between an inner cylinder surface of the sleeve 2 and an outer circumferential surface of the pivot shaft 5. The bushes 8 and 9 are inserted into the sleeve 2 side under a low pressure, and the inner circumferential surfaces thereof are made so as to be slidable on the outer circumferential surface of the pivot shaft 5. The bushing 8 is located at a proximal side and the bushing 9 is located at the tip portion side, and are separated by a smaller-diameter section 2b formed in the inner cylindrical surface of the sleeve 2. The pivot shaft 5 is therefore supported by two spaced cylindrical surfaces. An end portion 9a of the bushing 9 is positioned so that it is spaced by a distance H toward the interior side of the vehicle with respect to the upper end of the protruding cylinder section 2a. This creates a deformation space S between the upper end of the bushing 9, the tip inner cylinder section of the sleeve 2 and the pivot shaft 5, as will be described later.

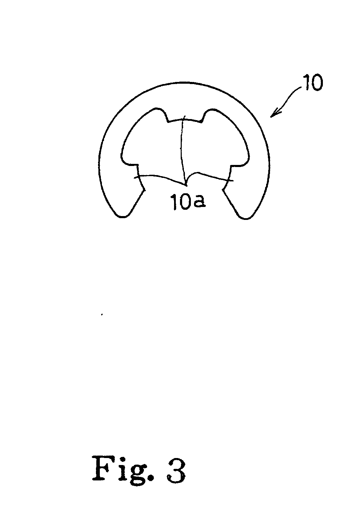

A depression preventing or resisting washer 10 is provided for preventing or resisting the depression or movement inwardly of the pivot shaft 5 toward the interior side of the vehicle with respect to the sleeve 2. In this embodiment, as shown in Fig. 3, the washer 10 has a part ring-like configuration in which a portion of its outer circumferential section is cut off or notched. The example of the washer 10, employed is the so-called E-washer in which stopping claws 10a are formed at predetermined intervals on its inner circumferential surface. In addition, the washer 10 is formed such that, when its outer circumferential section is brought into contact with a tip portion of the protruding cylinder section 2a from the exterior side of the vehicle, the stopping claws 10a locate into a stopping or locking groove 5a formed in the pivot shaft 5 so that they are stopped or locked therein in order to restrict movement of the pivot shaft 5 toward the interior side of the vehicle. In this embodiment the stopping groove 5a is formed so as to constitute a portion of the deformation space S, thereby effectively enlarging that space S. In the Figures, reference numeral 11 signifies a water proof cap for covering the washer 10 section of the sleeve 2.

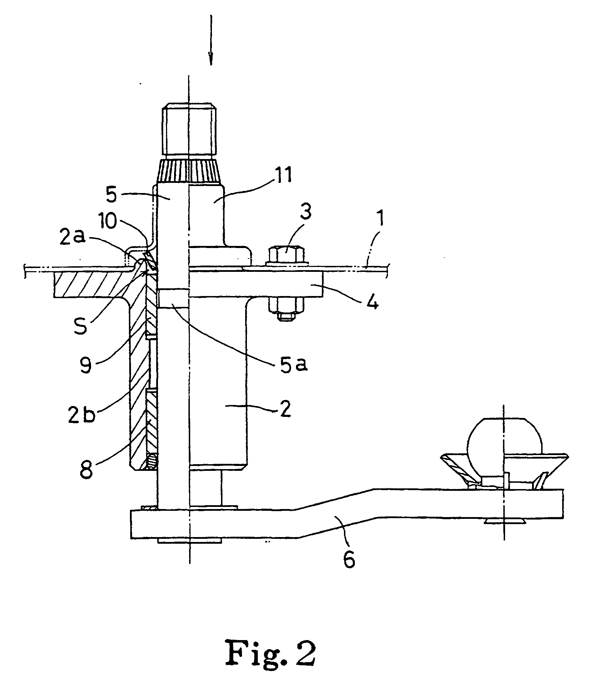

In the above construction, when a load is applied axially on the pivot shaft 5 from the exterior side of the vehicle and this load exceeds a predetermined value (a load whereby the washer 10 undergoes deformation), the washer 10 is deformed into a state where its inner circumferential section is shifted toward the interior of the vehicle (that is, it is deformed into a generally conical washer configuration). This causes the notched portion of the washer 10 to open so that the washer 10 disengages from the pivot shaft 2. The pivot shaft 5 and the sleeve 2 are thus released from their depression prevention conditions, and the pivot shaft 5 is depressed or moves toward the interior side of the vehicle, thereby providing an impact absorption function (see Figure 2). Additionally, in this case, the deformation of the washer 10 occurs in the deformation space S provided between the pivot shaft 5 and the sleeve 2; consequently, a smooth washer deformation is achievable while preventing the washer 10 from being bent locally, and damage such as breakdown are reduced when the pivot shaft 5 receives a load axially.

Furthermore, since the deformation space S is provided effectively by utilizing the accommodation space for the bushing 9 to be located between the pivot shaft 5 and the sleeve 2, it is possible to eliminate the need for creating the deformation space S by providing a large diameter on all such occasions, so that size increase of the sleeve is avoidable. Additionally, a portion of the deformation space S is created in a manner that the pivot shaft stopping groove 5a is made wide on the interior side of the vehicle and the washer 10 is made such that its outer circumferential section comes into contact with the tip portion of the sleeve 2 from the interior side of the vehicle and is deformed on receiving a load in a condition where its inner circumferential section comes into contact with the exterior side of the vehicle end portion of the stopping groove 5a from the exterior side of the vehicle to establish a two-point supporting structure. Accordingly, there is no obstacle in the deformation space and this allows the deformation at the deformation stress of the washer 10 to reduce the differences between predetermined load values for the deformation of the washer 10.

Moreover, in the present construction, the water proof cap 11 enables the prevention of loss of the washer 10 which has been deformed and disengage from the pivot shaft 5 and permits the retrieval thereof.

## Claims

1. A wiper apparatus for a motor vehicle, comprising:
a sleeve (2) securable to a vehicle body (1); and
a pivot shaft (5) which extends through and is supported rotatably in said sleeve (2), one end portion of the shaft (5) on the interior side of the vehicle being connected to a drive source and its other end portion on the exterior side of the vehicle being coupled to a wiper arm (7),
wherein said pivot shaft (5) is designed to be depressed toward said interior side of the vehicle with respect to said sleeve (2) when a load exceeding a predetermined value is applied axially on said pivot shaft (5) from said exterior side of the vehicle, a depression preventing or resisting member (10) being interposed between said pivot shaft (5) and said sleeve (2) and being deformable when receiving said load, **characterised in that**
said depression preventing or resisting member (10) comprises a washer with a part ring-like configuration which is supported in a two-point supporting arrangement such that its inner circumferential section engages in a stopping groove (5a) formed in the pivot shaft (5) and can contact the end of the exterior side of the stopping groove (5a) from the vehicle exterior side while the outer circumferential section can contact the tip portion (2a) of the sleeve (2) from the interior side of the vehicle, whereby
when said load is applied on the pivot shaft (5) in the axial and vehicle interior direction the contacting portion with the stopping groove (5a) is urged towards the interior side of the vehicle to allow the depression preventing member (10) to deform into a conical-washer shape in the interior direction of the vehicle within a deformation space S provided between said pivot shaft (5) and said sleeve (2) by using said contacting portion of the tip portion (2a) of the sleeve (2) as a fulcrum.

2. A wiper apparatus for a motor vehicle according to claim 1, wherein said deformation space S is provided at least in part by the accommodation space for a bearing bush (8, 9), located between said pivot shaft (5) and said sleeve (2).

3. A wiper apparatus for a motor vehicle according to claim 1 or claim 2, wherein said washer is an E-washer and has stopping claws (10a) with predetermined clearance in the inner circumference, said stopping claws (10a) being arranged to engage said stopping groove (5a) formed in the pivot shaft (5).

## Revendications

1. Dispositif d'essuyage pour un véhicule à moteur, comprenant :
un manchon (2) pouvant être fixé sur une carrosserie de véhicule (1) ; et
un axe de pivot (5) qui s'étend au travers et est monté rotatif dans ledit manchon (2), un tronçon d'extrémité de l'axe de pivot (5) du côté intérieur du véhicule étant relié à une source motrice et son autre tronçon d'extrémité du côté extérieur du véhicule étant relié à un bras d'essuyage (7),
dans lequel ledit axe de pivot (5) est conçu pour être enfoncé en direction dudit côté intérieur du véhicule par rapport audit manchon (2) lorsqu'une force excédant une valeur pré-déterminée est appliquée axialement sur ledit axe de pivot (5) depuis ledit côté extérieur du véhicule, un élément empêchant ou résistant à l'enfoncement (10) étant intercalé entre ledit axe de pivot (5) et ledit manchon (2) et étant déformable lorsque qu'il reçoit ladite force, **caractérisé en ce que**
ledit élément d'empêchement ou résistant à l'enfoncement (10) comporte une rondelle avec une configuration semblable à une portion d'anneau qui est supportée dans un logement de support à deux points de telle sorte que sa section circonférencentielle interne s'engage dans une gorge d'arrêt (5a) pratiquée sur l'axe de pivot (5) et peut toucher l'extrémité du côté extérieur de la gorge d'arrêt (5a) depuis le côté extérieur du véhicule tandis que la section circonférentielle externe peut toucher le tronçon de bout (2a) du manchon (2) depuis le côté intérieur du véhicule, de sorte que
lorsque ladite force est appliqué sur l'axe de pivot (5) selon la direction axiale et vers l'intérieur du véhicule, le tronçon en contact avec la gorge d'arrêt (5a) est pressé en direction du côté intérieur du véhicule pour permettre à l'élément empêchant l'enfoncement (10) de se déformer en prenant la forme d'une rondelle conique vers l'intérieur du véhicule dans un espace de déformation S disposé entre ledit axe de pivot (5) et ledit manchon (2) en utilisant ledit tronçon en contact avec le tronçon de bout (2a) du manchon (2) comme zone d'appui.

2. Dispositif d'essuyage pour un véhicule à moteur selon la revendication 1, dans lequel ledit espace de déformation S est constitué au moins en partie par l'espace de montage d'un coussinet (8,9), situé entre ledit axe de pivot (5) et ledit manchon (2).

3. Dispositif d'essuyage pour un véhicule à moteur selon la revendication 1 ou la revendication 2, dans lequel ladite rondelle est une rondelle en E et comporte des griffes d'arrêt (10a) avec des espaces libres prédéterminés sur la circonférence interne, lesdites griffes d'arrêt (10a) étant disposées pour s'engager dans ladite gorge d'arrêt (5a) pratiquée sur l'axe de pivot (5).

## Patentansprüche

1. Wischervorrichtung für ein Kraftfahrzeug, enthaltend:
eine Hülse (2), die an einer Fahrzeugkarosserie (1) befestigbar ist; und
eine Drehwelle (5), die verläuft durch die und drehbar gehalten ist in der Hülse (2), wobei ein Endteil der Welle (5) an der Innenseite des Fahrzeuges mit einer Antriebsquelle verbunden ist und ihr anderer Endteil an der Außenseite des Fahrzeuges an einen Wischerarm (7) gekoppelt ist,
wobei die Drehwelle (5) gestaltet ist, um zur Innenseite des Fahrzeuges bezüglich der Hülse (2) niedergedrückt zu werden, wenn eine Belastung, die einen vorgegebenen Wert übersteigt, axial auf die Drehwelle (5) von der Außenseite des Fahrzeuges aufgebracht ist, wobei ein Niederdrückverhinderungs- oder -widerstandsglied (10) zwischen der Drehwelle (5) und der Hülse (2) zwischengeschaltet ist und deformierbar ist, wenn es die Belastung aufnimmt, **dadurch gekennzeichnet,**
**dass** das Niederdrückverhinderungs- oder -widerstandsglied (10) eine Beilagscheibe mit einer teilringartigen Konfiguration enthält, die in einer Zweipunkt-Halteanordnung gehalten ist, so dass ihre Innenumfangssektion in eine Stoppnut (5a) eingreift, die in der Drehwelle (5) ausgebildet ist, und das Ende der Außenseite der Stoppnut (5a) von der Fahrzeugaußenseite her kontakten kann, während die Außenumfangssektion den Randbogen (2a) der Hülse (2) von der Innenseite des Fahrzeuges kontakten kann,
wodurch, wenn die Belastung auf die Drehwelle (5) in der Axialrichtung und Fahrzeuginnenraumrichtung aufgebracht wird, der kontaktierende Teil mit der Stoppnut (5a) zur Innenseite des Fahrzeuges gedrängt wird, um es dem Niederdrückverhinderungsglied (10) zu gestatten, sich in eine Konusbeilagscheibenform in der Innenraumrichtung des Fahrzeuges innerhalb eines Deformationsraumes S zu deformieren, der zwischen der Drehwelle (5) und der Hülse (2) vorgesehen ist, durch Verwendung des kontaktierenden Teils des Randbogenteils (2a) der Hülse (2) als einen Hebelpunkt.

2. Wischervorrichtung für ein Kraftfahrzeug nach Anspruch 1, wobei der Deformationsraum S wenigstens teilweise durch den Unterbringungsraum für eine Lagerbuchse (8, 9) bereitgestellt ist, der zwischen der Drehwelle (5) und der Hülse (2) liegt.

3. Wischervorrichtung für ein Kraftfahrzeug nach Anspruch 1 oder Anspruch 2, wobei die Beilagscheibe eine E-Beilagscheibe ist und Stoppkrallen (10a) mit vorgegebenem Abstand im Innenumfang hat, welche Stoppkrallen (10a) angeordnet sind, um in die Stoppnut (5a) einzugreifen, die in der Drehwelle (5) ausgebildet ist.
